(19) Europäisches Patentamt

European Patent Office

Office européen des brevets

(11) **EP 0 873 926 B1**

(12) **EUROPÄISCHE PATENTSCHRIFT**

(45) Veröffentlichungstag und Bekanntmachung des Hinweises auf die Patenterteilung:
**25.06.2003   Patentblatt 2003/26**

(51) Int Cl.$^7$: **B60T 10/02**, B60T 1/087

(21) Anmeldenummer: **98106671.5**

(22) Anmeldetag: **11.04.1998**

(54) **Verfahren und Vorrichtung zur maximalen Ausnutzung der Bremswirkung eines Retarders**

Apparatus and procedure to maximally utilize the braking of a retarder

Procédé et dispositif pour l'utilisation maximale de freinage d'un relantisseur

(84) Benannte Vertragsstaaten:
**DE ES FR SE**

(30) Priorität: **23.04.1997  DE 19716919**
**23.04.1997  DE 29707304 U**

(43) Veröffentlichungstag der Anmeldung:
**28.10.1998   Patentblatt 1998/44**

(73) Patentinhaber: **Voith Turbo GmbH & Co. KG**
**89522 Heidenheim (DE)**

(72) Erfinder:
• **Friedrich, Jürgen**
  **74564 Crailsheim (DE)**
• **Vogelsang, Klaus**
  **74564 Crailsheim (DE)**

• **Scherer, Roland**
  **74564 Crailsheim (DE)**
• **Gröner, Harald**
  **74564 Crailsheim (DE)**
• **Betz, Jürgen**
  **74589 Satteldorf (DE)**
• **Daum, MAtthias**
  **74564 Crailsheim (DE)**
• **Adams, Werner**
  **74564 Crailsheim (DE)**

(74) Vertreter: **Dr. Weitzel & Partner**
**Friedenstrasse 10**
**89522 Heidenheim (DE)**

(56) Entgegenhaltungen:
**EP-A- 0 177 767          EP-A- 0 716 966**
**WO-A-94/27845          DE-A- 4 136 759**

**Beschreibung**

Die Erfindung betrifft ein Verfahren und ein Steuer-/Regelsystem zur maximalen Ausnutzung der Bremswirkung eines Retarders, bei dem die während des Bremsens erzeugte Wärme mit Hilfe eines Kühlmediums eines Kühlsystems abgeführt wird.

Eine Begrenzung der Bremswirkung eines Retarders wird insbesondere deswegen angestrebt, um eine Überhitzung des Kühlmediums, mit dem die während des Bremsens vom Retarder erzeugte Wärme abgeführt wird, zu verhindern. Hierzu sind aus dem Stand der Technik eine Vielzahl von Regelungen und Verfahren bekanntgeworden.

So beschreibt beispielsweise die PCT/SE93/00478 ein Verfahren und eine Regelung für einen Retarder, bei dem die vom Retarder erzeugte Wärme mit Hilfe des Motorkühlmediums abgeführt wird, bei dem die Bremswirkung in Abhängigkeit von mindestens der Drehzahl der Antriebsmaschine begrenzt wird. Bei einer derartigen Regelung bzw. Steuerung wird davon ausgegangen, daß die Drehzahl der Antriebsmaschine mit der Drehzahl der Wasserpumpe und diese wiederum stets mit der Fördermenge im Kühlkreislauf korreliert und daher eine Überhitzung des Kühlmediums dadurch verhindert werden kann, daß die Retarderbremsleistung bei niedrigen Motordrehzahlen auf einen vorgegebenen Wert, reduziert wird. Dieser vorgegebene Wert kann in Form einer Kennlinie in einem Speicherbaustein abgelegt sein. Gemäß der oben genannten Druckschrift PCT/SE93/00478, deren Offenbarungsgehalt vollumfänglich in dieser Anmeldung mit aufgenommen wird, ist vorgesehen, die Begrenzung für die Retarderbremsleistung linear mit zunehmender Motordrehzahl zu reduzieren. Nachteilig an dieser Steuerung ist, daß die Kühlleistung des Kühlsystems nicht voll ausgenutzt werden kann und damit die Retarderbremsleistung in vielen Betriebsfällen zu stark begrenzt wird. Dies ist beispielsweise insbesondere bei kühler Witterung der Fall, bei der eine wesentlich höhere Kühlkapazität des Kühlsystems als bei beispielsweise hohen Außentemperaturen zur Verfügung steht Des weiteren wird ein Ausfall der Wasserpumpe nicht berücksichtigt.

Eine andere Möglichkeit, eine Überhitzung des Kühlsystems zu vermeiden, besteht darin, eine Regelung vorzusehen, bei der die Retarderbremsleistung in Abhängigkeit der Temperatur des Kühlmediums reduziert wird. Derartige Steuerungen sind ebenfalls in der PCT/SE93/00478 sowie in "M. Schwab, W. Härdtle, K. F. Heinzelmann, Der ZF-Intarder, ATZ Automobiltechnische Zeitschrift 95 (1993), S. 254-255" offenbart. Nachteilig an derartigen Systemen ist deren Trägheit, die beim Einregeln auf eine bestimmte Temperatur zu dem aus der Regelungstechnik bekannten Überschwingen für eine längere Zeitdauer führt. Um zu verhindern, daß das Kühlsystem aufgrund dieses Überschwingens geschädigt wird, setzt die Begrenzung auf eine bestimmte Retarderbremsleistung bereits weit unterhalb der vom Kühlsystem noch maximal tolerierten Temperatur ein. Dies hat zur Folge, daß bei derartigen Regelungen die vom Kühlsystem zur Verfügung gestellte Kühlleistung ebenfalls wiederum nicht optimal ausgenutzt wird und damit die Retarderbremsleistung stärker als nötig eingeschränkt wird.

DE 41 36 759 A beschreibt einen hydrodynamischen Retarder bei dem der Einfluß der Tumperatur auf die Bremsleistung verringert wird. Dabei wird aber der Bremsleistung immer noch nicht optimal ausgenutzt.

Es ist somit Aufgabe der Erfindung, ein Verfahren und eine Regelvorrichtung bzw. Steuerung anzugeben, mit der die zuvor genannten Probleme überwunden werden können und die Bremsleistung des Retarders maximal ausgenutzt wird.

Erfindungsgemäß wird dieses Problem durch ein Verfahren mit den Merkmalen des Anspruches 1 sowie durch ein Steuer-/Regelsystem gemäß den Merkmalen des Anspruches 11 gelöst.

Erfindungsgemäß ist vorgesehen, die Kühlleistung des Kühlkreislaufes ständig zu bestimmen bzw. zu ermitteln und die Bremsleistung des Retarders mindestens als Funktion der Kühlleistung des Kühlsystems einzustellen bzw. zu regeln. Hierzu umfaßt das erfindungsgemäße Steuer-/Regelsystem Mittel zur Erfassung der Kühlleistung des Kühlsystems sowie eine Steuer-/Regeleinheit, wobei die Steuer-/Regeleinheit den Retarder bei Überschreiten einer vorgegebenen maximalen Kühlleistung, die als Sollwert bei einer Regelung in einem Speicherbaustein abgelegt sein kann, derart ansteuert, daß die Retarderbremsleistung begrenzt wird und somit die vorgegebene maximale Kühlleistung nicht überschritten wird.

Um die Retarderbremsleistung in Abhängigkeit von Umgebungsparametern stets im optimalen Bereich zur Verfügung zu stellen, ist vorgesehen, den Sollwert für die Kühlleistung bzw. die maximal zulässige Kühlleistung, auf die geregelt bzw. begrenzt werden soll, in Abhängigkeit von mindestens einer der nachfolgenden Größen festzulegen: der Umgebungstemperatur, der Gehäusetemperatur des Retarders, der Stellung des Thermostaten im Kühlkreislauf, der ein Maß dafür ist, welche Menge von Kühlmittel durch den Kühler und welche am Kühler vorbeifließt, des Druckes im Kühlkreislauf, der kapazitiven Energieaufnahme der gesamten Kühlanlage, der Lüfterdrehzahl, der Wasserpumpendrehzahl, der Gangstellung des Getriebes, des Kupplungszustandes, der Fahrzeuggeschwindigkeit oder der Hinterachsübersetzung.

Besonders vorteilhaft ist es, bei der Festlegung des Sollwertes für die Regelung bzw. Maximalwertes für die Kühlleistung die aktuelle Außentemperatur am Fahrzeug zu berücksichtigen. Bekanntermaßen ist die Kühlleistung des Kühlsystems bei niedrigen Außentemperaturen höher als bei hohen Außentemperaturen, so daß der Retarder bei niedrigen Außentemperaturen eine höhere Bremsleistung entwickeln kann, deren Wärme vom Kühlsystem abgeführt werden kann. Derartige Abhängigkeiten gelten auch für sämtliche anderen oben aufgeführte Größen, die den Sollwert beeinflussen können.

Die aktuelle Kühlleistung des Systems, d.h. der Istwert für die Regelung kann dadurch bestimmt werden, daß in einer ersten Ausführungsform der Erfindung der Kühlmitteldurchsatz durch den Retarder im Falle eines Primärretarders, bei dem das Arbeitsmedium gleich dem Kühlmedium ist und durch den Wärmetauscher im Falle diese Medien getrennt sind, bestimmt wird. Eine Möglichkeit der Bestimmung des Kühlmitteldurchsatzes wäre, mit Hilfe eines Durchflußsensors den Kühlmittelstrom zu ermitteln. Bei Aufnahme der durch die abgegebene Wärmeenergie des Retarders verursachten Temperaturerhöhung im Kühlkreislauf kann dann die aktuelle Kühlleistung des Kühlmediums bestimmt werden.

Eine andere bevorzugte Ausführungsform, die aktuelle Kühlleistung zu bestimmen, besteht darin, den Kühlmittelstrom indirekt mit Hilfe der Gleichung:

$$\frac{\Phi_{Ret}}{c_p \cdot \Delta\vartheta \cdot \varsigma} = \dot{V} \quad (1)$$

zu ermitteln.

Hierbei bezeichnet $\phi_{Ret}$ die aktuelle Retarderbremsleistung, die aus dem Retarderbremsmoment und der Drehzahl des Retarders, die bei einem Sekundärretarder der Fahrzeuggeschwindigkeit entspricht, berechnet werden kann, $c_p$ ist spezifische Wärmekapazität des Kühlmittels, $\zeta$ dessen spezifische Dichte und $\Delta\vartheta$ die Temperaturdifferenz, die durch die Aufnahme der Wärmeenergie verursacht wird.

Mit Hilfe dieses berechneten aktuellen Kühlmittelstromwertes kann die Kühlleistung des Kühlsystems bestimmt werden. Liegt die Kühlleistung des Kühlsystems unterhalb des vorgegebenen Sollwertes, so wird keine Reduzierung des Retarderbremsmomentes vorgenommen, übersteigt der aktuelle Kühlleistungswert den vorgegebenen Sollwert, so kann entweder im Falle einer Steuerung die Retarderbremsleistung auf einen vorgegebenen Wert begrenzt werden oder aber es wird die Retarderbremsleistung als Stellgröße einer derartigen Regelung so lange verändert, bis die sich hieraus ergebende Kühlleistung im Kühlsystem dem vorgegebenen Sollwert entspricht.

Als Alternative zur Bestimmung der Kühlleistung des Kühlsystems mit Hilfe des aktuell gemessenen bzw. bestimmten Kühlmitteldurchsatzes ist vorgesehen, die Kühlleistung des Kühlsystems aus Fahrzeuggeschwindigkeit, Hinterachsübersetzung, Gangstellung sowie Kupplungszustand zu bestimmen.

Besonders bevorzugt ist es, wenn zur Bestimmung der Kühlleistung des Kühlsystems des weiteren das Kennfeld der Wasserpumpe herangezogen wird.

Bei Kenntnis von Fahrzeuggeschwindigkeit, Hinterachsübersetzung und Gangstellung sowie Kupplungszustand kann nämlich auf die Motordrehzahl und damit die Drehzahl der Wasserpumpe geschlossen werden. Ist nun das Kennfeld der Wasserpumpe bekannt, so kann aufgrund der drehzahlabhängigen Förderleistung der Wasserpumpe die Kühlleistung des Kühlsystems ermittelt werden. Der Vorteil einer derartigen Ermittlung der Kühlleistung ist darin zu sehen, daß zur Bestimmung nur Größen verwendet werden, die für andere Zwecke des Fahrzeugmanagements bereits ermittelt wurden, wie beispielsweise die Fahrzeuggeschwindigkeit.

Wird der Retarder über eine längere Zeit nicht eingesetzt, d.h. liegt eine sogenannte bremsfreie Phase vor, so kühlt sich das Kühlmedium und/oder das Arbeitsmedium des Retarders wieder ab. Bei einsetzender Retarderbremse wird im Falle eines Retarders, bei dem Arbeitsmedium und Kühlmedium getrennt sind, beispielsweise zunächst das Arbeitsmedium des Retarders erwärmt, bevor Kühlleistung vom Kühlsystem zur Abführung der während der Bremsung entwickelten Wärme zur Verfügung gestellt werden muß. Um die Kühlleistung des Systems optimal zu nutzen, ist daher in einer Fortbildung der Erfindung vorgesehen, die Stellgröße für die Regelung, dies ist in vorliegendem Fall die Retarderbremsleistung, die mindestens als Funktion der Kühlleistung des Kühlsystems geregelt wird, um einen variablen und/oder fest vorbestimmten Wert und/oder eine Zeitdauer anzuheben. Dies bedeutet zum Beispiel bei Erstbremsungen, daß die Retardersteuerung bzw. -regelung erst mit erhöhter Impulslänge einsetzt.

In einer Weiterbildung der Erfindung kann vorgesehen sein, daß aus den erfaßten Kühlmitteldurchfluß- und/oder Temperaturwerten ein zeitlicher Gradient ermittelt wird. Je nach Anstieg des Gradienten kann vorgesehen sein, daß die Regelung auf den vorgegebenen maximalen Sollwert der Kühlleistung früher oder später einsetzt, um so ein starkes Überschwingen des Systems bei der Regelung auf den vorgegebenen Kühlleistungssollwert zu verhindern. In einer vereinfachten Ausführungsform kann beispielsweise ein Gradientenwert vorgegeben sein, ab dem die Regelung einsetzt. Die Gradientenregelung kann alternativ oder zusätzlich zu der Regelung, die bei Überschreiten eines vorgegebenen Kühlleistungssollwertes anspricht, vorgesehen sein. Auch überlagerte Regelungen sind denkbar.

Während das erfindungsgemäße Verfahren generell bei allen Retardern, beispielsweise auch bei elektrischen Retardern, wie sie aus der Druckschrift "Fahrzeugkomponenten (Retarder) - Mehr Sicherheit und Fahrgastfreundlich - in: bus-magazin, Heft 8, August 1993, Seiten 39-39" oder DE 296 09 311 U1, deren Offenbarungsgehalt vollumfänglich in diese Anmeldung miteingeschlossen wird, bekannt sind, eingesetzt werden kann, ist in einer besonders vorteilhaften Ausgestaltung der Retarder als hydrodynamischer Retarder ausgebildet.

Besonders vorteilhaft ist die hierin beschriebene Steuerung bzw. Regelung, wenn das Kühlsystem zur Kühlung des Retarders das Motorkühlsystem ist, da insbesondere in diesen Fällen dafür Sorge getragen werden muß, daß eine Überhitzung des Motors ausgeschlossen wird, um Motorschäden zu verhindern.

Neben dem Verfahren stellt die Erfindung auch ein Steuer-/Regelsystem bzw. eine Steuer-/Regeleinrichtung zur Verfügung, wobei das Regelsystem mindestens Mittel zur Erfassung der Kühlleistung des Kühlsystems sowie eine Steuer-/Regeleinheit umfasst und das System dadurch gekennzeichnet ist, daß die Steuer-/Regeleinheit den Retarder zumindest bei Überschreiten einer vorgegebenen Kühlleistung derart ansteuert, daß die Retarderbremsleistung begrenzt wird, so daß mindestens eine vorgegebene Kühlleistung nicht überschritten wird.

in einer bevorzugten Ausführungsform kann vorgesehen sein, daß die Mittel zur Erfassung der Kühlleistung Mittel zur Bestimmung des Kühlmitteldurchsatzes aufweisen. In einer ersten Ausführungsform können diese Mittel zur Bestimmung des Kühlmitteldurchsatzes Drucksensoren zur Bestimmung der Druckdifferenz im Kühlkreislauf umfassen. In einer zweiten Ausführungsform ist vorgesehen, daß die Mittel zur Bestimmung des Kühlmitteldurchsatzes Durchflußsensoren aufweisen.

Eine andere Möglichkeit der Bestimmung des Kühlmitteldurchsatzes besteht darin, die aktuelle Retarderbremsleistung zu erfassen sowie die Temperaturdifferenz des Kühlmediums, die durch die Wärmeaufnahme vom Retarder her verursacht wird. Über die Gleichung

$$\dot{V} = \frac{\Phi_{Ret}}{c_p \cdot \Delta\vartheta \cdot \varsigma}$$

kann aus diesen Größen der Kühlmittelstrom V und damit der Kühlmitteldurchsatz bestimmt werden, was wiederum Auskunft über die aktuelle Kühlleistung gibt. Hierbei bezeichnet $\phi_{Ret}$ die Retarderbremsleistung, $c_p$ die spezifische Wärme des Kühlmediums, $\varsigma$ die spezifische Dichte des Kühlmediums und $\Delta\vartheta$ die durch die Wärmeaufnahme verursachte Temperaturdifferenz.

Zur Bestimmung der Temperaturdifferenz können in einer Ausführungsform mindestens zwei Temperatursensoren vorgesehen sein, wovon einer der Temperatursensoren vor der Stelle, an der die Wärmeaufnahme erfolgt, angeordnet ist und der andere an einer Stelle, die dahinter liegt.

Zur ständigen Anpassung des Kühlleistungssollwertes bzw. Maximalwertes der Kühlleistung an die verschiedenen Umgebungsparameter bzw. für eine alternative Bestimmung der Kühlleistung kann vorgesehen sein, daß die Vorrichtung des weiteren umfaßt:

Mittel zur Erfassung der Stellung des Thermostaten im Kühlkreislauf, Mittel zur Bestimmung der Umgebungstemperatur, Mittel zur Bestimmung der Gehäusetemperatur, Mittel zur Bestimmung des Druckes im Kühlsystem, Mittel zur Bestimmung der Lüfterdrehzahl, Mittel zur Bestimmung der Wasserpumpendrehzahl, Mittel zur Bestimmung der Fahrzeuggeschwindigkeit, Mittel zur Bestimmung der Gangstellung, Mittel zur Bestimmung des Kupplungszustandes sowie Mittel zur Bestimmung der Hinterachsübersetzung. Ein Vorteil einer derartigen Ausführungsform liegt darin, daß die Kühlleistung, ab der die Regelung einsetzen soll bzw. auf die die Retarderbremsleistung hingeregelt wird in Abhängigkeit von den Betriebsbedingungen und Umgebungsparametern neu gesetzt werden kann und somit die Kühlleistung des Systems in Abhängigkeit von den Betriebsbedingungen bzw. Umgebungsparametern immer optimal genutzt wird. Ein weiterer Vorteil ist darin zu sehen, daß die Kühlleistung bei bekannter Hinterachsübersetzung, Gangstellung, Kupplungszustand und Fahrzeuggeschwindigkeit berechnet werden kann. Ganz besonders vorteilhaft ist es hierbei, das Kennfeld der Wasserpumpe mit zu berücksichtigen. Diese Art der Bestimmung der Kühlleistung zeichnet sich insbesondere dadurch aus, daß nur sehr wenige Signale zusätzlich zu den bereits für andere Funktionen des Motormanagements aufgenommenen zu ermitteln sind. Dies vereinfacht die Sensorik erheblich.

Während das Steuer-/Regelsystem bei jeder Art von Retardem, beispielsweise auch elektrischen Retardern, die gekühlt werden müssen, Verwendung finden kann, liegt ein besonders bevorzugter Anwendungsbereich auf dem Gebiet der hydrodynamischen Retarder. Die Steuer-/Regelvorrichtung ist sowohl bei hydrodynamischen Retardern, bei denen das Arbeitsmedium vom Kühlmedium getrennt ist und der Wärmeübergang mit Hilfe eines Wärmetauschers vom Arbeitsmedium auf das Kühlmedium erfolgt, einsetzbar, wie auch bei Retardem, bei denen das Arbeitsmedium gleichzeitig Kühlmedium ist. Ersteres umfaßt im wesentlichen sogenannte Sekundärretarder, wie sie beispielsweise in der PCT/SE93/00478 oder "M. Schwab, W. Härdtle, K.F. Heinzelmann, Der ZF-Intarder, ATZ Automobiltechnische Zeitschrift 95 (1993) S. 250 ff" offenbart sind, deren Offenbarungsgehalt vollumfänglich in dieser Anmeldung miteingeschlossen wird, während letztere Ausführungsform vorzugsweise bei Primärretardern, wie beispielsweise in der DE 44 40 162 A1 offenbart, deren Offenbarungsgehalt vollumfänglich mit in die Anmeldung einbezogen wird, vorzufinden sind.

Neben der Regelung bzw. Steuerung in bezug auf eine vorgegebene Kühlleistung kann beispielsweise als Sicherheitsfunktion ein weiterer Temperatursensor im Kühlkreislauf angeordnet sein, der unabhängig von den zuvor beschriebenen arbeitet und die Temperatur des Kühlmediums mißt.

Überschreitet die Temperatur des Kühlmediums, aus welchen Gründen auch immer, einen vorgegebenen Wert, so wird die Kühlleistungsregelung beispielsweise deaktiviert und die Retarderbremsleistung auf Null reduziert.

Die vorliegende Erfindung soll nunmehr anhand der nachfolgenden Figuren beispielhaft beschrieben werden.

Es zeigen:

Fig. 1   eine Antriebseinheit mit einer erfindungsgemäßen Steuer-/Regelvorrichtung und einem Retarder, bei dem das Kühlmedium zugleich Arbeitsmedium ist;

Fig. 2   eine Antriebseinheit mit der erfindungsgemäßen Steuer-/Regelvorrichtung mit einem Retarder, bei dem das Arbeitsmedium getrennt vom Kühlmedium ist;

Fig. 3   ein Antriebsstrang mit den Mitteln zur Berechnung der Kühlleistung;

Fig. 4   ein Diagramm, bei dem das Retarderbremsmoment über der Retarderdrehzahl aufgetragen ist und eine Begrenzung der Retarderbremsleistung im Hinblick auf eine konstant vorgegebene Kühlleistung erfolgt;

Fig. 5   das Retarderbremsmoment über der Retarderdrehzahl, wobei eine Begrenzung der Retarderbremsleistung bei hohen Drehzahlen in Abhängigkeit der durch Umgebungsparameter vorgegebenen Kühlleistungswert festgelegt wird;

Fig. 6   den Verlauf der maximal zulässigen Retarderbremsleistung gemäß der aus dem Stand der Technik - PCT/SE/00478 - bekannten Steuerung in Abhängigkeit von der Motordrehzahl.

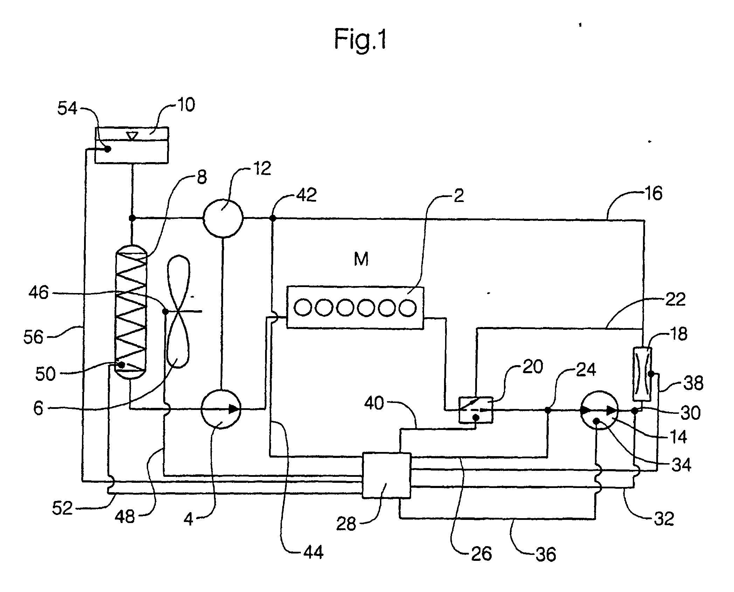

In Fig. 1 ist eine Antriebseinheit mit einem Motor 2, einer Wasserpumpe 4, einem Lüfter 6, einem Kühler 8, einem Überdruckbehälter 10, einem Thermostatventil 12 sowie einem Retarder 14 dargestellt. Das Kühlmedium des Motors ist in vorliegender Ausführungsform zugleich Arbeitsmedium des Retarders und wird in einem Kühlsystem 16 umgewälzt. Die Einstellung der Retarderbremsleistung erfolgt in dem vorliegenden Ausführungsbeispiel mit Hilfe einer Drossel 18, deren Querschnitt verändert werden kann, wie beispielsweise in der DE 44 08 349 A1 beschrieben, deren Offenbarungsgehalt vollumfänglich in dieser Anmeldung miteinbezogen wird.

In den Kühlkreislauf dem Retarder vorgeschaltet ist ein Umschaltventil 20, das vorliegend als Zwei-Positions-Ventil ausgebildet ist, mit dem die Kühlflüssigkeit des Kühlsystems 16 im Bremsbetrieb durch den Retarder hindurchgeführt werden kann, und falls der Retarder nicht aktiviert ist, das Kühlmedium über eine Bypassleitung 22 am Retarder 14 vorbeigeleitet wird.

Bei der vorliegenden Ausführungsform wird die aktuelle Kühlleistung, also der Kühlleistungs-Istwert des Systems aus dem Kühlmittelstrom V bestimmt. Der Kühlmittelstrom V wird wiederum indirekt durch Aufnahme der Temperaturdifferenz des Kühlmediums vor und nach dem Retarder, der durch die Aufnahme der beim Bremsen erzeugten Wärme bedingt ist, und die aktuelle Retarderleistung ermittelt. Hierzu umfaßt das vorliegende Steuer-/Regelsystem einen ersten Temperatursensor 24, der in Strömungsrichtung vor dem Retarder 14 angeordnet ist und das Temperatursignal über Leitung 26 an die Steuer-/Regeleinheit 28 übermittelt. Der Temperaturwert nach dem Retarder wird über Sensor 30 abgegriffen und an die Steuer-/Regeleinheit 28 über Leitung 32 übermittelt. Die Retarderleistung wird aus dem Retarderbremsmoment und der Retarderdrehzahl, die über Sensor 34 aufgenommen wird, bestimmt. Der Drehzahlwert wird über Leitung 36 der Steuer-/Regeleinheit 28 zugeführt.

In der Steuer-/Regeleinheit ist ein für die Kühlanlage vorgegebener und/oder variabler maximal zulässiger Wert, der sogenannte Kühlleistungssollwert abgelegt. Überschreitet nun die gemessene Kühlleistung, die vom System zur Abführung der vorm Retarder erzeugten Wärme aufgebracht wird, den vorgegebenen Sollwert oder aber ist ein zu steiler zeitlicher Anstieg bei einer Gradientenregelung festgestellt worden, so wird mit der Steuer-/Regeleinheit die Retarderbremsleistung begrenzt. Dies kann auf den vorgegebenen Kühlleistungssollwert geregelt vorgenommen werden. Die Einstellung der Retarderbremsleistung erfolgt über das Drosselventil 18, und zwar indem die Drossel entsprechend der vorgegebenen Retarderbremsleistung eingestellt wird. Eine Möglichkeit der Einstellung der Retarderbremsleistung besteht darin bei vorgegebener bzw. bekannter Retarderdrehzahl die Retarderbremsleistung entsprechend einzustellen.Das Signal hierfür wird über Steuerleitung 38 von der Steuer-/Regeleinheit 28 an die Drossel 18 übermittelt. Ist eine Einstellung der Retarderbremsleistung über Drossel 18 und Steuerleitung 38 nicht möglich, so kann vorgesehen sein, daß die Steuer-/Regeleinheit über Leitung 40 das Umschaltventil 20 anspricht und der Retarder deaktiviert wird, indem die Kühlflüssigkeit über die Bypassleitung 22 geleitet wird. Eine derartige Ansteuerung kann auch dann erfolgen, wenn ein zusätzlicher, in den Kühlkreislauf eingebrachter Temperatursensor 42 eine Überhitzung des Kühlmediums über Leitung 44 signalisiert als Art Notabschaltung.

Neben einem fest vorgegebenen Kühlleistungssollwert, der in der Steuer-/Regeleinheit abgelegt sein kann, ist es auch möglich, den Kühlleistungssollwert in Abhängigkeit von den Umgebungsparametern ständig neu vorzugeben. Hierfür kann beispielsweise die Umgebungstemperatur am Kühler über Temperaturfühler 50 aufgenommen und Leitung 52 an die Steuer-/Regeleinheit 28 übermittelt werden. Des weiteren kann beispielsweise die Lüfterdrehzahl über Sensor 46 und Leitung 48 der Steuer-/Regeleinheit zugeführt werden sowie der Druck im Kühlsystem über Sensor 54 und Leitung 56.

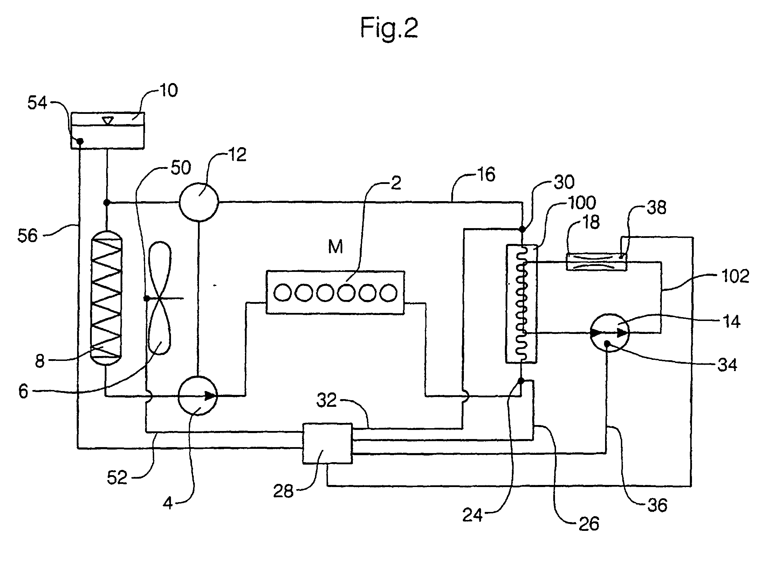

In Figur 2 ist eine Antriebseinheit dargestellt, bei der das Arbeitsmedium des Retarders nicht zugleich Kühlmedium der Antriebseinheit ist. Gleiche Bauteile wie in Figur 1 sind mit denselben Bezugsziffern wie in Figur 1 versehen. Im Gegensatz zu der Ausführungsform gemäß Figur 1 ist das Arbeitsmedium des Retarders 14 in Figur 2 vom Kühlmedium des Kühlkreislaufes 16 getrennt. Die während des Bremsbetriebes des Retarders entstehende Wärme wird vom Arbeitsmedium aufgenommen. Das Arbeitsmedium des Retarders wird im Arbeitskreislauf 102 umgewälzt und gelangt in den Wärmetauscher 100. Im Wärmetauscher 100 wird die Wärme vom Arbeitsmedium des Retarders an das Kühlmedium des Kühlkreislaufes abgegeben. Wie in Figur 1 ist der Kühlkreislauf 16, an den die Wärme abgegeben wird, der Motorkühlkreislauf. Durch die Übertragung der Wärme vom Arbeitsmedium auf das Kühlmedium des Kühlkreislaufes 16 erhöht sich die Temperatur des Kühlmediums am Wärmetauscherauslauf. Über den Kühler 8 wird wiederum die Wärme des Kühlmediums des Kühlkreislaufes 16 an die Umgebung abgegeben.

Wie in Figur 1 so wird auch bei der Steuer-/Regeleinheit 28, die in Figur 2 dargestellt ist, die Kühlleistung über den Kühlmitteldurchsatz bestimmt. Der Kühlmittelstrom kann aus der Retarderleistung, die über den Drehzahlsensor 34 und das Retarderbremsmoment bestimmt wird, sowie die Mittel für Temperatursensoren 24 und 30 ermittelte Temperaturdifferenz aufgrund der Wärmeabgabe vom Arbeitsmedium an das Kühlmedium ermittelt werden. Die aktuellen Temperatur- bzw. Drehzahlwerte werden der Steuer-/Regeleinheit 28 zugeführt, dort kann der Kühlmittelstrom gemäß der in der Anmeldung bereits mehrfach erwähnten Gleichung (1) auf Seite 4 bestimmt werden. Der aktuelle Kühlmittelleistungswert wird sodann mit dem vorgegebenen Sollwert der Kühlleistung verglichen. Wie schon bei der Antriebseinheit gemäß Figur 1 kann dieser Wert als konstanter in der Steuer-/Regeleinheit gespeichert sein oder unter Berücksichtigung von Umgebungsparametern die Umgebungstemperatur entsprechend den Betriebsbedingungen immer neu gesetzt werden. Die Regelung der Retarderbremsleistung erfolgt analog zu der Ausführungsform gemäß Fig. 1 mit Hilfe einer in den Kreislauf des Arbeitsmediums 102 eingebrachten Drossel 18. Die Ansteuerung erfolgt über Leitung 38 mit den der Drossel zugeordneten Steuermitteln.

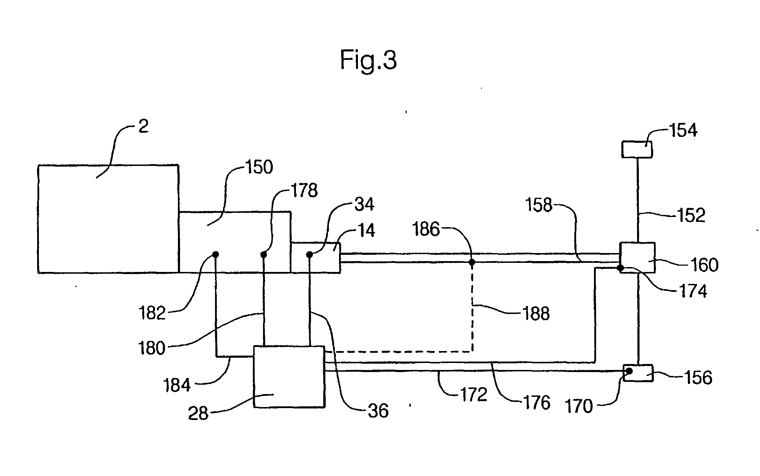

In Figur 3 ist beispielhaft der Antriebsstrang eines Fahrzeuges mit einem Retarder 14, der in dem vorliegenden Ausführungsbeispiel ein getriebeabtriebsseitig angeordneter Retarder, also ein sogenannter Sekundärretarder, ist, dargestellt. In Fig. 3 sind im Gegensatz zu Fig. 1 und 2 die Kühlleitungen des Kühlsystems nicht dargestellt. Gleiche Aggregate wie in den Figuren 1 und 2 sind wiederum mit gleichen Bezugsziffern versehen.

An den Motor 2 schließt sich das Getriebe 150 an. Getriebeabtriebsseitig ist der Retarder 14 angeordnet. Der Antrieb erfolgt in dem vorliegenden Ausführungsbeispiel über die Hinterachse 152 und die Hinterräder 154, 156. Die Leistung wird vom Motor über das Getriebe und die Gelenkwelle 158 an das Hinterachsgetriebe 160 und von dort auf die Räder 154 und 156 übertragen. Wie schon in den Ausführungsbeispielen gemäß Fig. 1 und 2, umfaßt die erfindungsgemäße Anordnung eine Steuer-/Regeleinheit 28, in der, wie nachfolgend beschrieben, Signale zur Bestimmung der Kühlleistung eingelesen werden, die mit einem vorgegebenen Sollwert verglichen werden. Die Regelung der Retarderbremsleistung erfolgt analog zu den Ausführungsfiguren gemäß den Figuren 1 und 2 mit Hilfe einer nicht dargestellten, in den Kreislauf des Arbeitsmediums des Sekundärretarders eingebrachten Drossel.

Zur rechnerischen Bestimmung der Kühlleistung ist in einem ersten Speicherbereich der Steuer-/Regeleinheit 28 ein Leistungskennfeld der Wasserpumpe abgelegt. In einem zweiten Speicherbereich der Steuer-/Regeleinheit wird die über Sensor 170 und Leitung 172 an die Steuereinheit übermittelte aktuelle Geschwindigkeit des Fahrzeuges abgelegt, die über Sensor 174 und Leitung 176 vorgegebene Hinterachsübersetzung, der über Sensor 178 und Leitung 180 vorliegende Kupplungszustand sowie die über Sensor 182 und Leitung 184 an die Steuer-/Regeleinheit übermittelte Gangstellung. Bei bekannter Hinterachsübersetzung, Gangstellung und Kupplungszustand kann über die Fahrgeschwindigkeit die Drehzahl des Motors 2 und damit die Drehzahl der Wasserpumpe bestimmt werden. Unter Hinzuziehung des im ersten Speicherbereich abgelegten Kennfeldes der Wasserpumpe kann sodann die aktuelle Kühlleistung des Kühlsystems ermittelt werden. Alternativ zur Rückrechnung aus Fahrgeschwindigkeit und Hinterachsübersetzung kann auch direkt die Abtriebsdrehzahl der Gelenkwelle 158 über den eingezeichneten Sensor 186 und die strichpunktierte Leistung 188 erfolgen. Auch hier ist eine Rückrechnung auf die Kühlleistung über die Gangstellung und den vorliegenden Kupplungszustand möglich. Wie schon in Fig. 1 und 2, wird die Retarderleistung aus dem Retarderbremsmoment und der Retarderdrehzahl, die über Sensor 34 aufgenommen wird, bestimmt. Der Drehzahlwert wird über Leitung 36 der Steuer-/Regeleinheit 28 zugeführt.

Im Falle, daß die Gelenkwellendrehzahl direkt aufgenommen wird, kann diese anstelle der über Sensor 34 bestimmten Retarderdrehzahl zur Bestimmung der Retarderleistung verwandt werden. Dies ist deswegen möglich, weil bei dem vorliegend dargestellten Sekundärretarder die Retarderdrehzahl direkt mit der Gelenkwellendrehzahl korriliert, falls der Retarder gegenüber der Gelenkwelle übersetzt ist oder aber direkt mit ihr übereinstimmt.

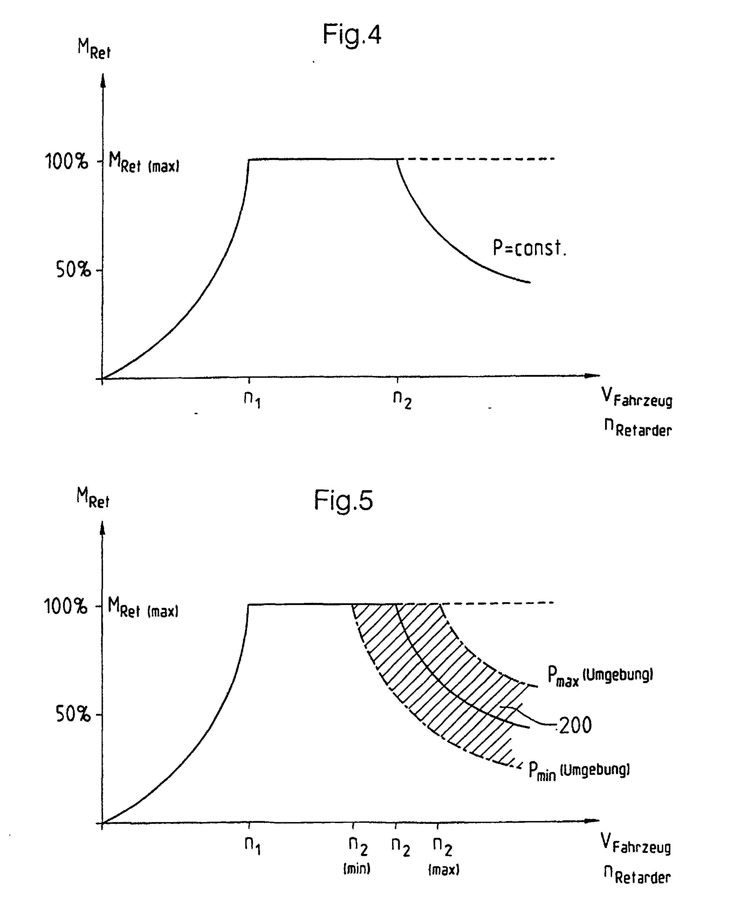

In Figur 4 ist beispielhaft der Verlauf des Retarderbremsmomentes $M_{Ret}$ in Abhängigkeit von der Retarderdrehzahl $n_{Ret}$ dargestellt. Bei Sekundärretardern, für die das vorliegende Diagramm beispielhaft sein soll, wiederum korreliert die Retarderdrehzahl direkt mit der Fahrzeuggeschwindigkeit, da der Retarder getriebeabtriebsseitig angeordnet ist. Für Primärretarder, die dem Getriebe vorgeschaltet sind, ist die Retarderdrehzahl direkt der Motordrehzahl proportional. Wie man dem Verlauf des Bremsmomentes $M_{Ret}$ über der Retarderdrehzahl entnimmt, steigt das Retarderbremsmoment zunächst wie theoretisch erwartet an. Um eine mechanische Überbeanspruchung des Retarders, die zu dessen Zerstörung führt, zu verhindern, wird ab einer bestimmten Retarderdrehzahl das Drehmoment begrenzt. Dieses maximale Retarderbremsmoment $M_{Ret}$ (max) ist in vorliegendem Diagramm mit 100 % angegeben. Die Drehzahl, aber der die Begrenzung auf ein konstantes maximales Retarderbremsmoment wirksam wird, ist im Diagramm in Figur 4 mit $n_1$ bezeichnet. Um zu verhindern, daß das Kühlsystem durch die zu große Wärmeentwicklung beim Retarderbremsbetrieb überlastet und damit beschädigt wird, ist es beispielsweise notwendig, die Retarderbremsleistung ab einer bestimmten Drehzahl $n_2$ zu begrenzen. Eine derartige Begrenzung bei hohen Drehzahlen erklärt sich daraus, daß bei gleichbleibendem Maximalbremsmoment die Retarderleistung mit steigender Drehzahl stark anwächst und die Kühlleistung des Kühlsystems im allgemeinen nicht mehr ausreicht, die mit dieser Retarderleistung korrelierende Wärmeleistung des Systems abzuführen. Bei der erfindungsgemäßen Regelung bzw. Steuerung auf eine vorgegebene maximale Kühlleistung wird das Retarderbremsmoment derart eingestellt, daß die Kühlleistung, die vom Kühlsystem zum Abführen der Wärmeenergie zur Verfügung gestellt wird, den vorgegebenen maximalen Kühlleistungswert nicht übersteigt. Eine derartige Steuerung bzw. Regelung auf einen Kühlleistungssollwert bedeutet ab der Drehzahl $n_2$ die Abgabe einer konstanten Retarderleistung. Wegen der Proportionalität

$$\phi_{Ret} \sim M_{Ret} \cdot n_{Ret}$$

wobei $\phi_{Ret}$ die Retarderleistung, $M_{Ret}$ das Retarderbremsmoment und $n_{Ret}$ die Retarderdrehzahl bezeichnen, ergibt sich für die Bremsmomentenkurve über der Drehzahl in Figur 3 dann für Drehzahlwerte $>n_2$ ein Abfall mit $1/n_2$.

Nachteilig an der in Fig. 4 dargestellten Regelung bzw. Steuerung auf einen fest vorgegebenen Wert der Kühlleistung bzw. Bremsleistung ist, daß Umgebungseinflüsse, wie beispielsweise die Umgebungstemperatur, der Druck im Kühlsystem, etc. nur ungenügend berücksichtigt werden.

Die Erfindung schlägt daher in einer Weiterbildung vor, wie in Fig. 5 dargestellt, den vorgegebenen Wert der maximalen Kühlleistung, ab der Bremsleistung des Retarders begrenzt wird, in Abhängigkeit von den Umgebungsparametern immer wieder zu ändern bzw. neu zu setzen. Für eine derartige Regelung bzw. Steuerung ergibt sich dann der in Figur 5 dargestellte beispielhafte Verlauf des Retarderbremsmomentes. Wie in Figur 4 ist bei niedrigen Drehzahlen des Retarders, d.h., $n < n_1$, wiederum der Anstieg, wie theoretisch erwartet, zu sehen. Ab der Drehzahl $n_1$ wird das Moment des Retarders wie in Figur 4 auf $M_{Ret}$(max) begrenzt, das wiederum mit 100 % angegeben ist. Je nach Umgebungsparametern wird die maximale Kühlleistung, ab der das Bremsmoment so eingestellt wird, daß die maximale Kühlleistung des Kühlsystems nicht überschritten wird, unterschiedlich gesetzt. Liegt z.B. eine sehr hohe Umgebungstemperatur vor, d.h. die Kühlleistung des Kühlsystems ist gering, so findet bereits ab der Drehzahl $n_2$ (min) eine entsprechende Begrenzung bzw. Regelung der Retarderbremsleistung und damit auch des Retarderbremsmomentes statt. Die sich dann ergebende Kurve ist mit $P_{min}$ (Umgebung) bezeichnet. Beispielsweise bei kalter Umgebung ist die Kühlleistung des Kühlsystems wesentlich höher. Eine Begrenzung der Bremsleistung setzt dann erst bei höheren Drehzahlen ein, beispielsweise ab der Drehzahl $n_2$ (max). In Figur 5 ist ein sich dann ergebender Bremsmomentenverlauf mit $P_{max}$ (Umgebung) bezeichnet. Für die erfindungsgemäße Steuerung bzw. Regelung ergibt sich also ein Retarderbremsmomentenverlauf, der in Abhängigkeit von den Umgebungsparametern, wie Umgebungstemperatur, Druck im Kühlsystem, Gehäusetemperatur des Retarders, Stellung des Thermostaten im Kühlsystem, etc. in den zwischen den Kurven $P_{min}$ (Umgebung) und $P_{max}$ (Umgebung) begrenzten schraffierten Bereich 200 liegen kann. Die Kurven $P_{min}$ (Umgebung) und $P_{max}$ (Umgebung) hängen wiederum stark davon ab, welche Umgebungsparameter erfaßt werden. Allgemein gilt, daß das Kühlsystem um so optimaler ausgenutzt wird, je mehr Umgebungsparameter erfaßt und zur Bestimmung der vorgegebenen maximalen Kühlleistung und damit Bremsleistung herangezogen werden können.

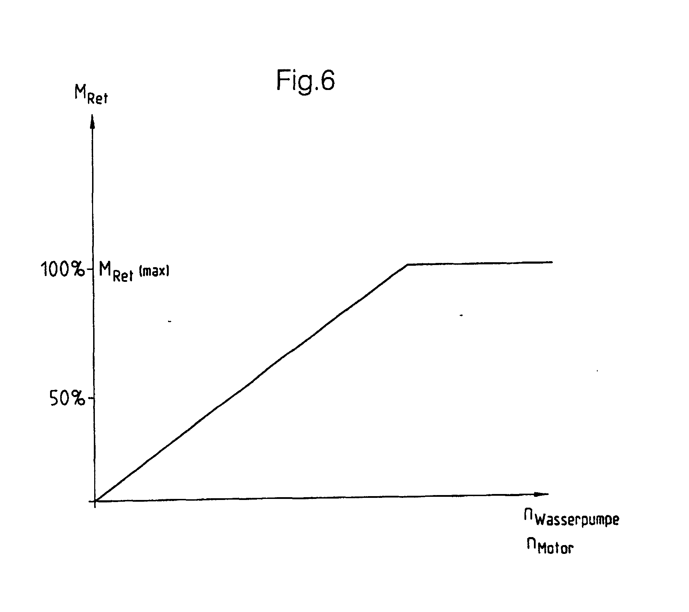

In Figur 6 ist der aus dem Stand der Technik in Form der PCT/SE93/00478 bekannte Verlauf der Retarderbremsleisutng über der Motorpumpendrehzahl aufgezeichnet. Wie hieraus zu entnehmen ist, wird die Retarderbremsleistung bei niedriger Motorpumpendrehzahl begrenzt. Diese Maßnahme resultiert aus der Tatsache, daß die Förderleistung der Wasserpumpe bei niedriger Drehzahl des Motors geringer als bei höherer Drehzahl ist und daher die Kühlleistung des Systems bei niedrigerer Wasserpumpendrehzahl geringer ausfällt als bei hohen Wasserpumpendrehzahlen. Im Gegensatz zu der erfindungsgemäßen Regelung bzw. Steuerung ist die in Figur 6 getroffene Maßnahme zur Verhinderung einer Überhitzung des Kühlsystems eine präventive Maßnahme, die die Retarderbremsleistung bei niedrigen Wasserpumpendrehzahlen unnötig stark begrenzt, insbesondere werden bei einer derartigen Regelung keinerlei Umgebungsparameter und Umwelteinflüsse berücksichtigt.

Dieser Nachteil des Standes der Technik resultiert insbesondere daraus, daß die Motordrehzahl nur ein indirektes Maß für die Förderleistung der Wasserpumpe und damit des Kühlstromes sowie der Kühlleistung des Systemes, sind, wohingegen gemäß der vorliegenden Erfindung diese durch Messung direkt bestimmt wird.

In der Erfindung wird somit erstmals ein Verfahren bzw. eine Regelung zur Verfügung gestellt, mit der das Retarderbremsmoment immer nur so stark begrenzt wird, daß die Retarderleistung im Bremsbetrieb eine aufgrund der Umgebungsparameter vorgegebene Kühlleistung des Kühlsystems nicht übersteigt. Auf diese Art und Weise ist es möglich, die Kühlleistung des Kühlsystems optimal auszunutzen und mit dem Retarderbremsmoment immer an der gerade noch zulässigen oberen Grenze zu fahren.

**Patentansprüche**

1. Verfahren zur maximalen Ausnutzung der Bremswirkung eines Retarders, bei dem die während des Bremsens erzeugte Wärme mit Hilfe eines Kühlmediums eines Kühlsystems abgeführt wird, wobei die Kühlleistung des Kühlkreislaufes bestimmt und/ oder ermittelt wird und die Bremsleistung des Retarders (14) mindestens als Funktion der Kühlleistung des Kühlsystems (16) eingestellt wird, **dadurch gekennzeichnet, daß** die Bremsleistung derart eingestellt wird, daß ein vorgegebener Sollwert der Kühlleistung nicht überschritten wird.

2. Verfahren nach Anspruch 1, **dadurch gekennzeichnet, daß** der Sollwert der Kühlleistung eine Funktion mindestens einer der nachfolgenden Größen ist:
der Umgebungstemperatur, der Gehäusetemperatur, der Stellung des Thermostaten im Kühlkreislauf, des Druckes im Kühlkreislauf, der Fahrzeuggeschwindigkeit, der Hinterachsübersetzung, der kapazitiven Energieaufnahme der gesamten Kühlanlage, der Gangstellung, des Kupplungszustandes, der Lüfterdrehzahl sowie der Wasserpumpendrehzahl.

3. Verfahren nach einem der Ansprüche 1 oder 2, **dadurch gekennzeichnet, daß** die die Kühlleistung mindestens durch die Erfassung des Kühlmitteldurchsatzes bestimmt wird.

4. Verfahren nach Anspruch 3, **dadurch gekennzeichnet, daß** der Kühlmitteldurchsatz mindestens durch Aufnahme der Retarderbremsleistung aus Drehzahl und Bremsmoment sowie der Aufnahme der Temperaturdifferenz des Kühlmittels, die durch die Wärmeentwicklung des Retarders (14) bedingt ist, bestimmt wird.

5. Verfahren nach einem der Ansprüche 2 bis 4, **da-**

**durch gekennzeichnet, daß** die Kühlleistung des Kühlsystems (16) aus Fahrzeuggeschwindigkeit, Hinterachsübersetzung, Gangstellung sowie Kupplungszustand bestimmt wird.

6. Verfahren gemäß Anspruch 5, **dadurch gekennzeichnet, daß** zur Bestimmung der Kühlleistung des Kühlsystems (16) des weiteren das Kennfeld der Wasserpumpe (4) herangezogen wird.

7. Verfahren nach einem der Ansprüche 1 bis 6, **dadurch gekennzeichnet, daß** bei einsetzendem Retarder (14) nach einer variablen und/oder vorbestimmten bremsfreien Phase die Stellgröße für die Regelung der Retarderbremsleistung gemäß einem der Ansprüche 1 bis 7 um einen variabel und/ oder fest vorbestimmten Wert und/oder Zeitdauer angehoben wird.

8. Verfahren nach einem der Ansprüche 1 bis 7, **dadurch gekennzeichnet, daß** aus den erfaßten Kühlmitteldurchfluß- und/oder den Temperaturwerten der zeitliche Gradient ermittelt wird und die Regelung der Bremsleistung einsetzt, wenn der zeitliche Gradient einen vorbestimmten Wert überschreitet.

9. Verfahren nach einem der Ansprüche 1 bis 8, **dadurch gekennzeichnet, daß** der Retarder (14) ein hydrodynamischer Retarder ist.

10. Verfahren nach einem der Ansprüche 1 bis 9, **dadurch gekennzeichnet, daß** das Kühlsystem (16) das Motorkühlsystem ist.

11. Steuer-/Regelsystem zur maximalen Ausnutzung der Bremswirkung eines Retarders (14) umfassend:

 Mittel zur Erfassung der Kühlleistung des Kühlsystems (16)
 eine Steuer-/Regeleinheit (28), wobei
 die Steuer-/Regeleinheit (28) den Retarder bei Überschreiten einer vorgegebenen maximalen Kühlleistung derart ansteuert, daß die Retarderbremsleistung begrenzt wird und somit die vorgegebene maximale Kühlleistung nicht überschritten wird,

 **dadurch gekennzeichnet, daß** die Mittel zur Erfassung der Kühlleistung des Kühlsystems (16) Mittel zur Bestimmung des Kühlmitteldurchsatzes umfassen.

12. System nach Anspruch 11, **dadurch gekennzeichnet, daß** die Mittel zur Bestimmung des Kühlmitteldurchsatzes Drucksensoren zur Bestimmung der Druckdifferenz im Kühlkreisiauf umfassen,

**13.** System nach Anspruch 11, **dadurch gekennzeichnet, daß** die Mittel zur Bestimmung des Kühlmitteldurchsatzes mit einem oder mehreren Durchflußsensoren umfassen.

**14.** System gemäß Anspruch 11, **dadurch gekennzeichnet, daß** die Mittel zur Bestimmung des Kühlmitteldurchsatzes mindestens umfassen: Mittel zur Bestimmung der Retarderbremsleistung, Mittel zur Bestimmung der durch die Wärmeaufnahme verursachten Temperaturdifferenz des Kühlmittels im Kühlsystem (16).

**15.** System gemäß Anspruch 14, **dadurch gekennzeichnet, daß** die Mittel zur Bestimmung der durch die Wärmeaufnahme verursachten Temperaturdifferenz mindestens eine vor der Stelle im Kühlkreislauf an der die Aufnahme der Wärme des Retarders (14) erfolgt, angeordneten Temperatursensor und mindestens einen nach dieser Stelle angeordneten Temperaturt of sensor umfassen.

**16.** System gemäß einem der Ansprüche 11-15, **dadurch gekennzeichnet, daß** das System des weiteren mindestens eines der nachfolgenden Mittel umfasst:

Mittel zur Erfassung der Stellung des Thermostaten im Kühlkreislauf,
Mittel zur Bestimmung der Umgebungstemperatur,
Mittel zur Bestimmung der Gehäusetemperatur,
Mittel zur Bestimmung des Druckes im Kühlsystem,
Mittel zur Bestimmung der Lüfterdrehzahl,
Mittel zur Bestimmung der Fahrzeuggeschwindigkeit,
Mittel zur Bestimmung der Gangstellung,
Mittel zur Bestimmung des Kupplungszustandes,
Mittel zur Bestimmung der Hinterachsübersetzung sowie
Mittel zur Bestimmung der Wasserpumpendrehzahl.

**17.** System gemäß Anspruch 16, **dadurch gekennzeichnet, daß** die Steuer-/Regeleinheit (28) einen ersten Speicherbereich umfaßt, in dem ein Leistungskennfeld der Wasserpumpe abgelegt ist, und einen zweiten Speicherbereich, in dem die Gangstellung, der Kupplungszustand, die Fahrzeuggeschwindigkeit sowie die Hinterachsübersetzung abgelegt sind, sowie einen dritten Speicherbereich, in dem aus Gangstellung, Kupplungszustand, Fahrzeuggeschwindigkeit, Hinterachsübersetzung unter Berücksichtigung des Leistungskennfeldes der Wasserpumpe die Kühlleistung des Kühlsystems ermittelt wird.

**18.** System gemäß einem der Ansprüche 12-19, **dadurch gekennzeichnet, daß** der Retarder (14) ein hydrodynamischer Retarder ist.

**19.** System gemäß Anspruch 18, dadurch geknnzeichnet, daß das Arbeitsmedium des Retarders (14) zugleich Kühlmedium ist.

**20.** System gemäß Anspruch 18, **dadurch gekennzeichnet, daß** das Arbeitsmedium des Retarders getrennt vom Kühlmedium ist

**21.** System nach Anspruch 19, **dadurch gekennzeichnet, daß** das System mindestens einen Sensor zur Erfassung der Temperatur des Arbeitsmediums des Retarders (14) umfasst.

**Claims**

**1.** A method for maximally utilizing the braking effect of a retarder, in which the heat produced during the braking is removed by means of a coolant of a cooling system, with the cooling output of the cooling circulation being determined and/or detected and the braking power of the retarder (14) being set at least as a function of the cooling output of the cooling system (16), **characterized in that** the braking power is set in such a way that a predetermined setpoint value of the cooling output is not exceeded.

**2.** A method as claimed in claim 1, **characterized in that** the setpoint of the cooling output is a function of at least one of the following variables:

the ambient temperature, the housing temperature, the position of the thermostat within the cooling circulation, the pressure in the cooling circulation, the vehicle speed, rear-axle transmission, the capacitative power consumption of the entire cooling system, the gear position, the state of the clutch, the fan speed and the water pump speed.

**3.** A method as claimed in one of the claims 1 or 2, **characterized in that** the cooling output is determined at least by the detection of the coolant throughput.

**4.** A method as claimed in claim 3, **characterized in that** the coolant throughput is determined at least by recording the retarder braking power from speed and braking moment as well as by recording the temperature difference of the coolant which is caused by the heat generation of the retarder (14).

5. A method as claimed in one of the claims 2 to 4, **characterized in that** the cooling output of the cooling system (16) is determined by vehicle speed, rear-axle transmission, gear position and state of the clutch.

6. A method as claimed in claim 5, **characterized in that** the characteristic diagram of the water pump (4) is used for determining the cooling output of the cooling system (16).

7. A method as claimed in one of the claims 1 to 6, **characterized in that** when the retarder (14) is activated after a variable and/or predetermined brakefree phase, the manipulated variable for controlling the retarder braking power according to one of the claims 1 to 7 is raised by a variable and/or fixedly predetermined value and/or period of time.

8. A method as claimed in one of the claims 1 to 7, **characterized in that** the temporal gradient is determined from the detected coolant flow and/or the temperature values and the control of the braking power commences when the temporal gradient exceeds a predetermined value.

9. A method as claimed in one of the claims 1 to 8, **characterized in that** the retarder (14) is a hydrodynamic retarder.

10. A method as claimed in one of the claims 1 to 9, **characterized in that** the cooling system (16) is the engine cooling system.

11. An open-loop/closed-loop control system for maximally utilizing the braking effect of a retarder (14), comprising: means for detecting the cooling output of the cooling system (16), an open-loop/closed-loop control unit (28), with the open-loop/closed-loop control unit (28) triggering the retarder on exceeding a predetermined maximum cooling output in such a way that the retarder braking power is limited and thus the predetermined maximum cooling output is not exceeded, **characterized in that** the means for detecting the cooling output of the cooling system (16) comprise means for determining the coolant throughput.

12. A system as claimed in claim 11, **characterized in that** the means for determining the coolant throughput comprise pressure sensors for determining the pressure difference in the cooling circulation.

13. A system as claimed in claim 11, **characterized in that** the means for determining the coolant throughput comprise one or several flow sensors.

14. A system as claimed in claim 11, **characterized in that** the means for determining the coolant throughput comprise at least the following:

> means for determining the retarder braking power, means for determining the temperature difference of the coolant in the cooling system (16) as caused by the heat absorption.

15. A system according to claim 14, **characterized in that** the means for determining the temperature difference produced by the heat absorption comprise at least one temperature sensor which is arranged in front of the point in the cooling circulation where the absorption of the heat of the retarder occurs and at least one temperature sensor is arranged after said point.

16. A system as claimed in one of the claims 11 to 15, **characterized in that** the system further comprises at least one of the following means:

> means for detecting the position of the thermostat in the cooling circulation;
> means for determining the ambient temperature;
> means for determining the housing temperature;
> means for determining the pressure in the cooling system;
> means for determining the fan speed;
> means for determining the vehicle speed;
> means for determining the gear position;
> means for determining the state of the clutch;
> means for determining the rear-axle transmission;
> and
> means for determining the water pump speed.

17. A system as claimed in claim 16, **characterized in that** the open-loop/close-loop control unit (28) comprises a first memory area in which a performance characteristic diagram of the water pump is stored and a second memory area in which the gear position, the state of the clutch, the vehicle speed as well as the rear-axle transmission is stored, as well as a third memory area in which the cooling output of the cooling system is determined from the gear position, state of the clutch, vehicle speed and rear-axle transmission by taking into account the performance characteristic diagram of the water pump.

18. A system as claimed in one of the claims 12 to 19, **characterized in that** the retarder (14) is a hydrodynamic retarder.

19. A system as claimed in claim 18, **characterized in that** the working medium of the retarder (14) is simultaneously the cooling medium.

**20.** A system as claimed in claim 18, **characterized in that** the working medium of the retarder is separated from the cooling medium.

**21.** A system as claimed in claim 19, **characterized in that** the system comprises at least one sensor for detecting the temperature of the working medium of the retarder (14).

**Revendications**

**1.** Procédé d'exploitation maximale de l'action de freinage d'un ralentisseur, par lequel la chaleur produite pendant le freinage est évacuée à l'aide d'un agent refroidisseur d'un système de refroidissement,
dans lequel

la puissance de refroidissement du circuit de refroidissement est fixée et/ou déterminée et la puissance de freinage du ralentisseur (14) est réglée au moins en tant que fonction de la puissance de refroidissement du système de refroidissement (16),

**caractérisé en ce que** la puissance de freinage est réglée de sorte qu'une valeur de consigne prédéfinie de puissance de refroidissement ne soit pas dépassée.

**2.** Procédé selon la revendication 1, **caractérisé en ce que** la valeur de consigne de la puissance de refroidissement est fonction d'au moins une des grandeurs suivantes :

la température environnante, la température du carter, la position du thermostat dans le circuit de refroidissement, la pression dans le circuit de refroidissement, la vitesse du véhicule, le rapport de transmission à l'essieu arrière, la capacité d'absorption d'énergie de l'ensemble de l'installation de refroidissement, la position des vitesses, l'état de l'embrayage, la vitesse de rotation du ventilateur et la vitesse de rotation de la pompe à eau.

**3.** Procédé selon l'une des revendications 1 et 2, **caractérisé en ce que** la puissance de refroidissement est déterminée au moins par la saisie du débit du fluide de refroidissement.

**4.** Procédé selon la revendication 3, **caractérisé en ce que** le débit du fluide de refroidissement est déterminé au moins par mesure de la puissance de freinage du ralentisseur à partir de la vitesse de rotation et du couple de freinage ainsi que par mesure de la différence de température du fluide de refroidissement provoquée par le dégagement de chaleur du ralentisseur (14).

**5.** Procédé selon l'une des revendications 2 à 4, **caractérisé en ce que** la puissance de refroidissement du système de refroidissement (16) est déterminée à partir de la vitesse du véhicule, du rapport de transmission à l'essieu arrière, de la position des vitesses et de l'état de l'embrayage.

**6.** Procédé selon la revendication 5, **caractérisé en ce que** pour déterminer la puissance de refroidissement du système de refroidissement (16), on se sert en outre du champ caractéristique de la pompe à eau (4).

**7.** Procédé selon l'une des revendications 1 à 6, **caractérisé en ce qu'**en cas d'activation du ralentisseur (14), après une phase exempte de freinage variable et/ou prédéterminée, la grandeur de réglage pour le réglage de la puissance de freinage du ralentisseur est relevée, selon l'une des revendications 1 à 7, d'une valeur et/ou d'une durée prédéterminée variable et/ou fixe.

**8.** Procédé selon l'une des revendications 1 à 7, **caractérisé en ce que**, à partir des valeurs saisies de débit du fluide de refroidissement et/ou de température, on détermine le gradient temporel et le réglage de la puissance de freinage commence lorsque le gradient temporel dépasse une valeur prédéterminée.

**9.** Procédé selon l'une des revendications 1 à 8, **caractérisé en ce que** le ralentisseur (14) est un ralentisseur hydrodynamique.

**10.** Procédé selon l'une des revendications 1 à 9, **caractérisé en ce que** le système de refroidissement (16) est le système de refroidissement du moteur.

**11.** Système de commande et de réglage pour l'exploitation maximale de l'action de freinage d'un ralentisseur (14) comprenant :

des moyens pour saisir la puissance de refroidissement du système de refroidissement (16) une unité de commande et de réglage (28) où l'unité de commande et de réglage (28) actionne la commande du ralentisseur lors d'un dépassement d'une puissance de refroidissement prédéfinie maximale de telle sorte que la puissance de freinage du ralentisseur est limitée et qu'ainsi la puissance de refroidissement prédéfinie maximale n'est pas dépassée,

**caractérisé en ce que** les moyens de saisie de la puissance de refroidissement du système de refroidissement (16) comportent des moyens de détermination du débit du fluide de refroidissement.

**12.** Système selon la revendication 11, **caractérisé en ce que** les moyens de détermination du débit du fluide de refroidissement comprennent des capteurs de pression pour déterminer la différence de pression dans le circuit de refroidissement.

**13.** Système selon la revendication 11, **caractérisé en ce que** les moyens de détermination du débit de fluide de refroidissement comprennent un ou plusieurs capteurs de débit.

**14.** Système selon la revendication 11, **caractérisé en ce que** les moyens de détermination du débit du fluide de refroidissement comprennent au moins des moyens pour déterminer la puissance de freinage du ralentisseur et des moyens pour déterminer la différence de température du fluide de refroidissement dans le système de refroidissement (16) causée par l'absorption de chaleur.

**15.** Système selon la revendication 14, **caractérisé en ce que** les moyens destinés à déterminer la différence de température causée par l'absorption de chaleur comprennent au moins un capteur de température placé dans le circuit de refroidissement devant l'endroit où se produit l'absorption de chaleur du ralentisseur (14) et au moins un capteur de température placé derrière cet endroit.

**16.** Système selon l'une des revendications 11 à 15, **caractérisé en ce que** le système comprend en outre au moins un des moyens suivants :

- moyen pour déterminer l'emplacement du thermostat dans le circuit de refroidissement,
- moyen pour déterminer la température environnante,
- moyen pour déterminer la température du carter,
- moyen pour déterminer la pression dans le système de refroidissement,
- moyen pour déterminer la vitesse de rotation du ventilateur,
- moyen pour déterminer la vitesse du véhicule,
- moyen pour déterminer la position des vitesses,
- moyen pour déterminer l'état de l'embrayage,
- moyen pour déterminer le rapport de transmission à l'essieu arrière
  et
- moyen pour déterminer la vitesse de rotation de la pompe à eau.

**17.** Système selon la revendication 16, **caractérisé en ce que** l'unité de commande et de réglage (28) comprend une première zone de mémoire, dans laquelle est mémorisé un champ caractéristique de la puissance de la pompe à eau, et une deuxième zone de mémoire dans laquelle sont mémorisés la position des vitesses, l'état de l'embrayage, la vitesse du véhicule et le rapport de transmission à l'essieu arrière, ainsi qu'une troisième zone de mémoire dans laquelle est déterminée la puissance de refroidissement du système de refroidissement à partir de la position des vitesses, de l'état de l'embrayage, de la vitesse du véhicule, du rapport de transmission à l'essieu arrière compte tenu du champ caractéristique de la puissance de la pompe à eau.

**18.** Système selon l'une des revendications 12 à 19, **caractérisé en ce que** le ralentisseur (14) est un ralentisseur hydrodynamique.

**19.** Système selon la revendication 18, **caractérisé en ce que** le fluide de travail du ralentisseur (14) est en même temps le fluide de refroidissement.

**20.** Système selon la revendication 18, **caractérisé en ce que** le fluide de travail du ralentisseur est séparé du fluide de refroidissement.

**21.** Système selon la revendication 19, **caractérisé en ce que** le système comprend au moins un capteur destiné à saisir la température du fluide de travail du ralentisseur (14).

# Fig.1

## Fig.2

Fig.3

EP 0 873 926 B1

## Fig.4

$M_{Ret}$

100% — $M_{Ret\,(max)}$

50%

P=const.

$n_1$   $n_2$   $V_{Fahrzeug}$
$n_{Retarder}$

## Fig.5

$M_{Ret}$

100% — $M_{Ret\,(max)}$

50%

$P_{max\,(Umgebung)}$

200

$P_{min\,(Umgebung)}$

$n_1$   $n_2$   $n_2$   $n_2$   $V_{Fahrzeug}$
(min)      (max)   $n_{Retarder}$

16

Fig.6